(19) Europäisches Patentamt / European Patent Office / Office européen des brevets

(11) **EP 4 471 708 B1**

(12) **EUROPEAN PATENT SPECIFICATION**

(45) Date of publication and mention of the grant of the patent:
**19.08.2026 Bulletin 2026/34**

(21) Application number: **23176000.0**

(22) Date of filing: **30.05.2023**

(51) International Patent Classification (IPC):
***G06T 7/00*** *(2017.01)* ***G06T 7/62*** *(2017.01)*

(52) Cooperative Patent Classification (CPC):
**G06T 7/0012; G06T 7/62;** G06T 2207/10081; G06T 2207/10088; G06T 2207/20081; G06T 2207/20084; G06T 2207/30008

(54) **SYSTEM FOR BONE VOLUME ASSESSMENT, METHOD AND COMPUTER-READABLE MEDIUM**

SYSTEM ZUR KNOCHENVOLUMENBEURTEILUNG, VERFAHREN UND COMPUTERLESBARES MEDIUM

SYSTÈME D'ÉVALUATION DE VOLUME OSSEUX, PROCÉDÉ ET SUPPORT LISIBLE PAR ORDINATEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**04.12.2024 Bulletin 2024/49**

(73) Proprietor: **MRIguidance B.V.**
**3581 BG Utrecht (NL)**

(72) Inventors:
- **Seevinck, Peter Roland**
  **3572 SH Utrecht (NL)**
- **Van der Velden, Tijl Antonius**
  **3524 WK Utrecht (NL)**

(74) Representative: **WENDE IP GbR**
**Hopfenstraße 8**
**80335 München (DE)**

(56) References cited:
**WO-A1-2022/008759**

- **KOCH VITALI ET AL: "Accuracy and precision of volumetric bone mineral density assessment using dual-source dual-energy versus quantitative CT: a phantom study", EUROPEAN RADIOLOGY EXPERIMENTAL, vol. 5, no. 1, 5 October 2021 (2021-10-05), XP093067659, Retrieved from the Internet <URL:https://link.springer.com/article/10.1186/s41747-021-00241-1/fulltext.html> DOI: 10.1186/s41747-021-00241-1**
- **JENS M. EDMUND ET AL: "A review of substitute CT generation for MRI-only radiation therapy", RADIATION ONCOLOGY, vol. 12, no. 1, 26 January 2017 (2017-01-26), XP055509584, DOI: 10.1186/s13014-016-0747-y**
- **HO KAI-YU ET AL: "Measuring bone mineral density with fat-water MRI: comparison with computed tomography", JOURNAL OF MAGNETIC RESONANCE IMAGING, vol. 37, no. 1, 10 July 2012 (2012-07-10), US, pages 237 - 242, XP093081327, ISSN: 1053-1807, DOI: 10.1002/jmri.23749**
- **FRANK ZIJLSTRA ET AL: "CT synthesis from MR images for orthopedic applications in the lower arm using a conditional generative adversarial network", ARXIV.ORG, CORNELL UNIVERSITY LIBRARY, 201 OLIN LIBRARY CORNELL UNIVERSITY ITHACA, NY 14853, 24 January 2019 (2019-01-24), XP081007774**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

The present invention relates to a system for bone volume assessment based on MRI patient scan data a method and a computer-readable medium.

According to the prior art, the inherent limitations of both Magnetic Resonance Imaging (MRI) and Computer Tomography Imaging (CT) have recently been tried to be compensated by parallel and combined use of both technologies.

For example, bone marrow can be affected by various pathologies, such as bone bruises after trauma and diffuse tumor infiltrations or osteoporosis and the like. Up to now, the major modalities for imaging of these pathologies have been MRI and CT, either only one of them being applied or both of them side by side, e.g. in the context of radiotherapy treatment planning, PET attenuation correction and bone quality assessment. Hence, also approaches using CT imaging for bone mineral assessment, e.g. supported by enhanced image manipulation, were analyzed in several studies like the following:

- Quantitative bone mineral analysis using dual energy computed tomography. Genant HK, Boyd D. Invest Radiol. 1977 Nov-Dec;12(6):545-51. PMID:591258
- Precise measurement of vertebral mineral content using computed tomography. Cann CE, Genant HK. J Comput Assist Tomogr. 1980 Aug;4(4):493-500. PMID: 7391292
- Quantitative computed tomography for spinal mineral assessment: current status. Genant HK, Cann CE, Ettinger B, Gordan GS, Kolb FO, Reiser U, Arnaud CD. J Comput Assist Tomogr. 1985 May-Jun;9(3):602-4. PMID:11536558

However, with the benefits of Dual Energy Computed Tomography (DECT), CT imaging also became even more interesting as an additional aid in such traditional MRI diagnosis. In particular, the use of DECT allows for the segmentation and visualization (color-coding) of the bone marrow based on a material decomposition into bone marrow, calcium, water, fatty tissue, calcium, hydroxyapatite and collagen matrix. Thus, the assessment of bone mineral densities based on DECT approaches has been investigated in several studies previously:

- Bone mineral assessment: new dual-energy CT approach. Nickoloff EL, Feldman F, Atherton JV. Radiology. 1988 Jul;168(1):223-8. PMID: 3380964
- Dual-energy CT-based assessment of the trabecular bone in vertebrae. Wesarg S, Kirschner M, Becker M, Erdt M, Kafchitsas K, Khan MF. Methods Inf Med. 2012;51(5):398-405. doi: 10.3414/ME11-02-0034. Epub 2012 Sep 28. PMID: 23038636
- Dual-energy CT-based phantomless in vivo three-dimensional bone mineral density assessment of the lumbar spine. Wichmann JL, Booz C, Wesarg S, Kafchitsas K, Bauer RW, Kerl JM, Lehnert T, Vogl TJ, Khan MF. Radiology. 2014 Jun;271(3):778-84. doi: 10.1148/radiol.13131952. Epub 2014 Jan 16. PMID:24475863

In a further step, such use of DECT for bone mineral assessment was further studied with respect to a phantomless approach:

- Evaluation of bone mineral density of the lumbar spine using a novel phantomless dual-energy CT post-processing algorithm in comparison with dual-energy X-ray absorptiometry. Booz C, Hofmann PC, Sedlmair M, Flohr TG, Schmidt B, D'Angelo T, Martin SS, Lenga L, Leithner D, Vogl TJ, Wichmann JL. Eur Radiol Exp. 2017;1(1):11. doi: 10.1186/s41747-017-0017-2. Epub 2017 Sep 20. PMID: 29708178
- Eur Radiol. 2015 Jun;25(6):1714-20. doi: 10.1007/s00330-014-3529-7. Epub 2014 Dec 7. Quantitative dual-energy CT for phantomless evaluation of cancellous bone mineral density of the vertebral pedicle: correlation with pedicle screw pull-out strength. Wichmann JL1, Booz C, Wesarg S, Bauer RW, Kerl JM, Fischer S, Lehnert T, Vogl TJ, Khan MF, Kafchitsas K.
- American College of Radiology (2013) ACR -SPR -SSR Practice Guideline for the Performance of Quantitative Computed Tomography (QCT) Bone Densitometry (Resolution 32). http://www.acr.org/~/media/ACR/ Documents/PGTS/guidelines/QCT.pdf. Accessed July 2017

Moreover, during the past decades also the use of MRI to support e.g. radiation therapy (RT) treatment planning, PET attenuation correction and bone quality assessment has increased significantly. This growing trend can be attributed in part to the superior soft-tissue contrast of MRI compared to CT imaging.

However, in consideration of the respective benefits and the combination of CT and MRI technology in order to achieve better results in medical imaging, the use of two separate technologies in parallel causes an increased workload and additional costs for providing and operating the respective systems.

A mathematical relationship between signal intensities from proton-density-weighted in-phase images generated by multi-fat-peak T2* - IDEAL MRI and BMD was derived using a set of calibration standards constructed from various concentrations of hydroxyapatite in water is suggested in the study of Ho Kai-Yu et al.: "Measuring Bone Mineral Density

with Fat-Water MRI: Comparison with Computed Tomography", Journal of Magnetic Resonance Imaging, published 10 July 2012.

The technique of synthetic CT, enabling e.g. MR-only radiotherapy workflows, has been developed in recent years.

Synthetic CT provides images generated from MR scans that emulate CT images regarding X-ray attenuation and electron density information. The images provide different Hounsfield units (HU) for different materials and these HU can be converted to electron density in the treatment planning system (TPS) using a calibration curve. A purpose of synthetic CT images is to provide information about X-ray attenuation and electron density to obtain dose calculations with the same accuracy as that of a CT image, enabling e.g. MR-only radiotherapy planning without needing additional CT images.

However, up to date synthetic CT is not capable of providing the same information about the examined tissue than DECT. Hence, DECT analysis of tissue is superior to former synthetic CT analysis, in particular with respect to tissue composition like the composition of bone structures.

It is an object of the invention to provide a system which is capable of providing a bone volume assessment for individual patients on basis of respective MRI data in order to provide an improved and more efficient process with respect to costs and workload by determining additional information from the MRI data due to specific transformation and processing of data, in order to allow for respective evaluation of the individual patient by utilization of only a single medical imaging process for such individual patient. Moreover, it is an object of the present invention to provide a corresponding method as well as a computer-readable medium.

These objectives are solved by a system according to claim 1, a method according to claim 13 and a computer-readable medium pursuant to claim 15. Preferred embodiments are provided in the dependent claims respectively.

According to the present invention a system for bone volume assessment based on MRI patient scan data is provided, comprising

- at least one processor module for handling and processing of MRI patient scan data,
- at least one storage module for storing patient data,

  wherein at least one data connection is provided between the processor module and the at least one storage module, such that data are transferrable for processing and/or for storing,
  wherein the processor module is further configured:

  - to receive and/or request at least one set of MRI patient scan data of a first patient from the storage module or from a MRI scanning device, and to apply a first transfer element on the at least one set of MRI patient scan data of the first patient such that at least one set of synthetic CT data of the first patient is provided,
  - to apply a second transfer element on the at least one set of MRI patient scan data of the first patient such that reduced patient data of the first patient are generated which provide tissue volume information, comprising fat volume related information of the first patient,
  - to apply a third transfer element on the reduced patient data and the at least one set of synthetic CT data of the first patient such that total bone volume information are achieved,

  wherein the processor module is configured to process and/or analyze/evaluate the MRI patient scan data, the at least one set of synthetic CT data and the reduced patient data, such that at least one bone volume parameter in form of bone mineral density of the first patient is determined.

The invention is based on the idea that by transformation and further evaluation of MRI patient scan data additional information can be gathered from the respective data set in order to allow for a detailed analysis of the bone composition, in particular of bone volume parameters like bone mineral density, calcium concentration or further parameters concerning the bone composition.

Moreover, as bone mineral density correlates with bone strength, and thus e.g. with pull-out strength of pedicle screws, the further idea underlying the present invention is to optimize healthcare treatment, namely e.g. for optimized placement of screws in the context of unstable spinal fractures, existing spinal instability, degenerative scoliosis, spinal fusion in anterior strut grafting or the like (see Eur Radiol. 2015 Jun;25(6):1714-20. doi: 10.1007/s00330-014-3529-7. Epub 2014 Dec 7. Quantitative dual-energy CT for phantomless evaluation of cancellous bone mineral density of the vertebral pedicle: correlation with pedicle screw pull-out strength. Wichmann JL1, Booz C, Wesarg S, Bauer RW, Kerl JM, Fischer S, Lehnert T, Vogl TJ, Khan MF, Kafchitsas K.*)*.

However, as original MRI imaging data do not provide such information in an obvious and immediate manner, the data, as gathered during MRI imaging or by generating synthetic CT data, have to be further processed and/or analyzed in order to emphasize various aspects being specific for corresponding bone compositions such that, in particular by

combination of such further processed data, additional information about the bone structure of the first patient and its composition can be gained.

In particular, multiple transfer elements can be provided according to the present invention in order to achieve appropriate data processing starting from MRI patient scan data and/or synthetic CT data for gathering sufficient information for assessment of bone structures, namely to assess bone volume parameters like mineral density as well as further associated parameters of the bone structures of the first patient.

MRI patient scan data particularly refer to the data of the first patient as acquired during a particular MRI scan. Hence, the MRI patient scan data can refer to specific parts of the first patient's body being focused on during MRI scanning process.

Alternatively, it is also possible that synthetic CT data for specific parts of the first patient's body are already provided.

In the context of the present invention, the processor module can be considered as e.g. a single processor unit, a computer or the like, which is suitable for (appropriate) data processing and/or handling.

Moreover, the storage module can be any kind of storing device like e.g. a solid state disc, a hard drive or a database being capable of storing and reading/forwarding data, thus for reading and writing of data.

Further, the processor module is configured to apply multiple, in particular three, different transfer elements for the purpose of appropriate data processing, in particular for appropriate processing of MRI patient scan data, in order to provide information about bone volume parameters, like e.g. bone mineral density.

In particular, the different transfer elements can be provided as data processing elements and/or algorithms in order to suitably handle, analyse and/or evaluate the individual first patient's data, starting from a MRI patient scan data set of such individual first patient. Thereby, synthetic CT data can be generated, reduced patient data providing specific information about tissue volume, like e.g. water and/or fat volume related information, of the first patient as well as total bone volume information, preferably separated (or separatable) from the fat volume information of the reduced patient data.

For example, in the context of the present invention it is possible that one MRI patient data set forms the basis of the overall process. These MRI patient data set can preferably be acquired by a single MRI sequence. From such MRI sequence(s), at least one 3D image data sets can be acquired which can subsequently be utilized for generation of at least one synthetic CT data set. Moreover, it is also possible that multiple different synthetic CT data sets are generated on basis of the MRI imaging sequence of the individual patient.

In particular, the application of the multiple transfer elements can be considered as a step-by-step data processing for which the processor module of the system is suitably/appropriately configured.

In case of MRI patient scan data, in particular three transfer elements are applied in order to generate suitable information according to the present invention.

In case synthetic CT data of the first patient are provided, in particular two transfer elements, namely the second and third transfer element(s), can be applicable in order to generate suitable information about bone volume parameter of the first patient.

In particular, by such stepwise data handling/processing the bone volume information can be extracted from the originally provided MRI patient scan data.

In consequence, the present invention provides a reliable and more efficient process for determination of bone volume information, i.e. a bone volume assessment, on sole basis of MRI patient scan data.

According to a preferred embodiment the first transfer element is trained on basis of the CT patient scan data and MRI patient scan data of a plurality of patients to generate synthetic CT data. Moreover, in another embodiment training data, in particular CT patient scan data and/or MRI patient scan data of a plurality of patients, for training and/or adaption of the first transfer element are stored in the storage module of the system and/or received by the system from a remote data storage.

In particular, the first transfer element is capable of generating synthetic CT patient data on basis of MRI patient scan data. The first transfer element can be trained and optimized on basis of data sets of a plurality of patients in order to improve results provided by the first transfer element.

Thus, MRI patient scans and corresponding CT patient scans can be used in order provide a configuration and/or adaption of the first transfer element such that the first transfer element is enabled to generate synthetic CT patient data on the sole basis of MRI patient scan data of the first patient.

CT and/or MRI patient scan data of such plurality of patients can be stored in the storage module such that the processor module can request such training information for the purpose of configuring and/or adapting the first transfer element.

Alternatively, such data information of the plurality of patients, i.e. MRI patient scan data and corresponding CT patient scan data as training data, can also be stored on and requested from a remote data storage, like a central server or the like.

According to another preferred embodiment the first transfer element is provided in form of a machine learning

element/model, in particular in form of a deep learning element/model, a neural net element/model, preferably a neural net of the type of Transformer, Encoder-decoder, diffusion, U-net, V-net, recurrent neural net, recurrent interface network (RIN) or Perceiver IO, or any other kind of a machine learning element/model .

Hence, the first transfer element can be trained on basis of given data sets, in particular on basis of MRI and CT patient scan data, in order to be enabled and configured on basis of such given data sets to provide synthetic CT data of the first patient, starting from corresponding MRI patient scan data of the first patient.

Moreover, the first transfer element can also be provided in any other form of a machine learning element as well.

In particular, the quality and effectiveness can be improved from time to time by the quality of learning data as provided and an increasing amount of such learning data.

Thus, the first transfer element can be further improved and configured in order to become more effective and provide results of increasing quality over time.

In one further embodiment of the present invention the CT patient scan data of a plurality of patients is provided in form of respectively two or more sets of CT patient scan data referring to different energy levels, in particular dual energy CT patient scan data, or to unenhanced multi-energy scan data.

In particular, by providing multiple sets of CT patient scan data, i.e. sets being captured of the same patient with different energies, the amount and quality of information as provided by such CT patient scan data can be improved. This information may also be used to generate at least on synthetic CT scan data referring to a specific tube voltage energy level. Moreover, such reference to a specific tube voltage energy level may also be accomplished by specific calibration process of a generated synthetic CT scan data set, such that as a result a specific synthetic CT scan data set is obtained that refers to a specific tube voltage energy.

Hence, the basis for configuration of the first transfer element, i.e. the respective training data basis, can be provided with such additional multi-energy information in order to improve the configuration/adaption of the first transfer element.

According to one embodiment the second transfer element is provided in form of an analysis element of the type Dixon , IDEAL , MAGO, MAGORINO, as a machine learning based water-fat decomposition or an in-phase and/or out-of-phase acquisition based water-fat decomposition or the like in order to determine fat and/or water volume related information from the MRI patient scan data and/or the synthetic CT data.

In particular, the second transfer element preferably provides a separation of fat and water fractions, in particular on basis of the MRI patient scan data of the first patient. Thus, the estimation of the total bone volume can be improved by applying the second transfer element for identification of the fat volume (information).

Preferably, a Dixon analysis can be applied as a second transfer element or e.g. an iterative decomposition of water and fat with echo asymmetry and least-squares estimation (IDEAL).

Moreover, the second transfer element can be provided in form of alternative techniques in the context of determination of water and/or fat volume related information from the MRI patient scan data or synthetic CT data of the first patient as well, like in-phase and out-of-phase acquisition, machine learning based water-fat decomposition or the like (see e.g. US 2021/0270919 A1; Triay Bagur et al., Magnitude-intrinsic water-fat ambiguity can be resolved with multipeak fat modeling and a multipoint search method, Magnetic Resonance in Medicine, Volume 82, Issue 1 p. 460-475*;* Bray et al., MAGORINO: Magnitude-only fat fraction and R*2 estimation with Rician noise modelling, Magnetic Resonance in Medicine, Volume 89, Issue 3 p. 1173-1192*;* Liu et al. Robust water-fat separation based on deep learning model exploring multi-echo nature of mGRE, Magnetic Resonance in Medicine, Volume 85, Issue 5 p. 2828-2841*).*

In summary, bone volume assessment can preferably be performed based on at least one set of synthetic CT patient data generated using a transfer element being trained by one type CT scan data of a plurality of patients. Besides, a fat fraction image can be provided, obtained by using a MRI-based water-fat decomposition transfer element/algorithm like DIXON, IDEAL, MAGO, MAGORINO, machine learning based water-fat decomposition or acquisition based water-fat decomposition (in-phase and/or out-of-/opposed-phase echo times based) .

In one further embodiment of the present invention the third transfer element is provided in form of a Nickoloff model element for determination of total bone volume, in particular on basis of MRI patient scan data and/or reduced patient data of the first patient.

In particular, the third transfer element can provide additional information about the total bone volume in order to achieve appropriate results concerning bone volume parameters like e.g. bone mineral density, fat percentage, calcium concentration, total density trabecular space or the like.

For this purpose, preferably a Nickoloff model can be applied as third transfer element in the context of the present invention.

Such Nickoloff model, as preferably applied in the context of the present invention, is also known from the publication Bone mineral assessment: new dual-energy CT approach. Nickoloff EL, Feldman F, Atherton JV. Radiology. 1988 Jul;168(1):223-8. PMID: 3380964

Alternatively, the third transfer element can be provided in form of other models or algorithms that allow for an appropriate data processing in order to allow for a further determination of bone volume parameters on basis of MRI patient

scan data and/or reduced patient data.

Especially, the Nickoloff model takes water fractions as well as red marrow together, i.e. as one fraction. However, by combination with e.g. a Dixon element as second transfer element, the red marrow fractions (among others comprising water) and yellow fractions (among others comprising fat) can be separated from each other, especially in terms of a comparison of data information as provided by the second and third transfer element.

According to one preferred embodiment the MRI patient scan data are provided by application of (dual-echo / multi-echo) gradient-echo sequences (ME-GRE), (turbo-)spin-echo sequences (TSE), dual-echo steady state (DESS), multi-echo steady state (MESS) sequences, balanced sequences (e.g. bSSFP), (Multi-echo) Ultrashort echo time (UTE) sequences, zero TE (zTE) sequences, synthetic MRI sequences, MR-fingerprinting-based sequences, MR-STAT-based sequences or the like, in particular such that enhanced determination of fat and/or bone volume of the first patient by the transfer elements is provided.

Hence, in the context of the present invention it is also possible to create MRI patient scan data comprising sequences/sets with focus on different information, due to the respectively applied sequence.

The resulting MRI patient scan data in total can provide further information due to the application of specific sequence techniques as mentioned before, like multi-echo, e.g. dual-echo GRE and/or the like.

In another embodiment the MRI patient scan data and/or CT patient scan data are provided and/or stored in DICOM format, HDF5 format, NIfTI format or the like.

Hence, the respective data sets are available in a standard format for medical imaging, ensuring maximum quality and availability.

Moreover, pursuant to a further embodiment of the present invention the system comprises at least one MRI scanning device, wherein the data connection is provided between the MRI scanning device and the at least one processor module and/or the at least one storage module, in particular an unidirectional data connection.

Hence, the system according to the present invention can also comprise the MRI scanning device itself, including a direct data connection to the processor module and/or the storage module.

Alternatively, the MRI scanning device for gathering MRI patient scan data can be situated at a remote location such that the system according to the present invention can be provided with corresponding MRI patient scan data, e.g. via a central server, a remote data connection or the like.

In consequence, the system according to the present invention does not necessarily require to have an MRI scanning device to be specifically assigned to it. Rather, the system according to the present invention can be provided in terms of an independent system whereby MRI patient scan data are provided from different MRI scanning devices via remote data connections.

Hence the system according to the present invention can be considered to comprise no (own/separate/individual) MRI scanning device or to be provided with an own MRI scanning device.

In one embodiment the system further comprises at least one calibration phantom element, wherein the calibration phantom element is applied once for determination of a general calibration factor for MRI patient scan data of a plurality of patients or for each MRI patient scan data of a plurality of patients respectively in order to determine individual calibration factors for the plurality of patients. Moreover, according to one preferred embodiment the at least one calibration phantom element is provided in form of a plurality of tubes and/or balls being filled with a homogenous or varying water-fat-fractions, preferably within water-fat-fractions in a range of 0 to 100 percent, in particular in a range of 20 to 80 percent.

Hence, by providing a standardized reference value in form of a calibration phantom element, in particular a calibration phantom element with multiple tubes/balls having varying/different water-fat-fractions, the accuracy of the resulting at least one bone volume parameter can be improved.

Moreover, in a further aspect the present invention refers to a method for bone volume assessment based on MRI patient scan data by application of the system according to one of the preceding claims, the method comprising the following steps:

- receiving and/or requesting at least one set of MRI patient scan data of a first patient from the storage module or from a MRI scanning device, and applying a first transfer element on the at least one set of MRI patient scan data of the first patient such that at least one set of synthetic CT data of the first patient is generated,
- applying a second transfer element on the at least one set of MRI patient scan data of the first patient such that reduced patient data of the first patient are generated which provide tissue volume information, comprising fat volume related information of the first patient,
- applying a third transfer element on the reduced patient data and the at least one set of synthetic CT data of the first patient such that total bone volume information are generated,

wherein the MRI patient scan data, the at least one set of synthetic CT data and the reduced patient data are processed and/or analysed and/or evaluated by the processor module, in order to determine at least one bone volume parameter in

form of bone mineral density of the first patient on basis of the MRI patient scan data of the first patient.

In particular, according to a method of the present invention bone volume assessment can be performed based on at least one synthetic CT/at least one set of synthetic CT data generated using a method trained with CT scans of a plurality of patients.

Besides, a fat percentage image has to be present/provided, which can be obtained using a MRI-based water-fat decomposition algorithm element like DIXON or IDEAL or the like.

Bone volume parameter, like mineral density and/or other associated parameters, can then be obtained by using the Nickoloff method or a process being based on the Nickoloff method.

Finally, a minimum of parameters has to be determined, preferably only one equation has to be used/solved, as both CT value and the fat volume ($V_F$) are known, such that total bone volume ($V_{TB}$) can be calculated directly.

Moreover, the method according to the present invention is provided to be executable by the sufficiently and correspondingly configured system according to the present invention.

According to another embodiment of the invention, the method further comprises the following steps:

- receiving MRI patient scan data of a plurality of patients,
- receiving CT patient scan data of a plurality of patients,
- applying the MRI patient scan data and the CT patient scan data for training of the first transfer element, preferably in form of a machine learning element, a deep learning element, a neural net element or the like, to generate at least one set of synthetic CT data on basis of MRI patient scan data of the first patient.

In particular, the method according to the present invention ensures that the first transfer element, which shall generate/generates synthetic CT data for the first patient from the MRI patient scan data of the first patient, is capable of providing an appropriate and sufficient quality of the resulting synthetic CT data.

Such quality can be ensured according to the method of the present invention by appropriate training of the first transfer element, preferably provided in form of a machine learning element like a deep learning element or a neural net element, with MRI patient scan data and corresponding CT patient scan data of a plurality of patients.

Hence, by providing an increasing amount of such data of a plurality of patients the first transfer element is even capable of improving over time.

According to a further aspect of the present invention, a computer-readable medium is provided comprising instructions which cause at least one computer (processor) or the like to execute the method according to the present invention.

In particular, the computer-readable medium can be a non-transitory computer-readable medium.

Hence, instructions which are readable and executable by a computer can be stored on any kind of storage medium, e.g. on CDs, DVDs, Flash-storage devices, USB sticks, hard drives, Solid State Discs, or the like.

Further details and advantages of the present invention shall now be disclosed in the connection with the drawings.

It is shown in:

**Fig. 1** a schematic illustration of an embodiment of a system for bone volume assessment;

**Fig. 2** a schematic flow diagram for a method for bone volume assessment; and

**Fig. 3** a schematic illustration of the method in accordance with Fig 2, including a step of calibration of the system.

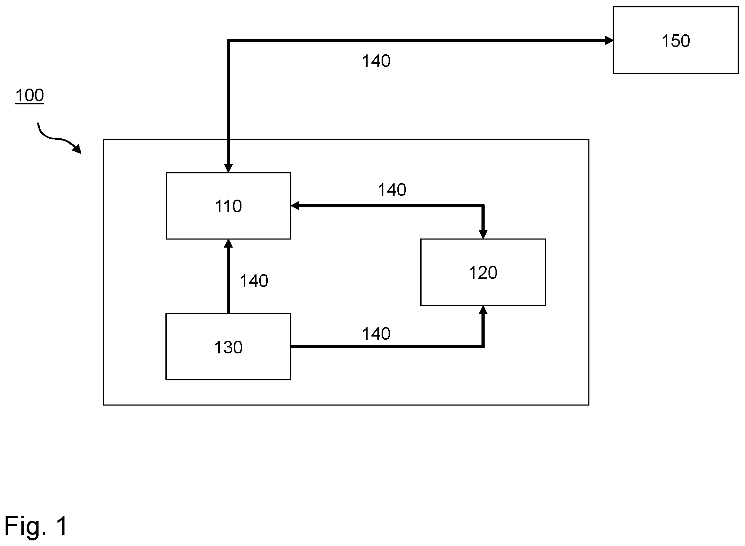

**Fig. 1** shows a schematic illustration of an embodiment of a system 100 for bone volume assessment, in particular determination of at least one bone volume parameter such as bone mineral density, fat percentage, calcium concentration, total density trabecular space and/or the like.

According to Fig. 1 the system 100 comprises at least one processor module 110 and at least one storage 120.

Optionally, the system 100 can further comprise at least one MRI scanning device 130.

The processor module 110 and the storage module 120 can be connected with each other by a bidirectional data connection 140.

Moreover, the optional MRI scanning device 130 can be connected to the processor module 110 and/or the storage module 120.

In particular, the data connection(s) 140 with the MRI scanning device 130 can be provided as unidirectional data connections 140.

Alternatively, the system 100 can be provided without at least one MRI scanning device 130.

In particular, one or multiple MRI scanning devices 130 can for example be situated at remote locations, with the MRI scanning device 130 being in data connection with the system 100, in particular with the at least one processor module

110 and the at least one storage 120 of the system 100.

Moreover, as a further alternative it is also possible that the at least one processor module 110 and the at least one storage module 120 are implemented in the at least one MRI scanning device 130.

With respect to the MRI scanning device 130, the system 100 can be provided as an embedded system, preferably embedded in a corresponding MRI scanning device 130.

Furthermore, a remote data storage and/or a server 150 can be connected with the system 100, as shown in Fig. 1.

In particular, the remote data storage 150 can comprise a data connection 140, preferably a bidirectional data connection 140, with the processor module 110 of the system 100.

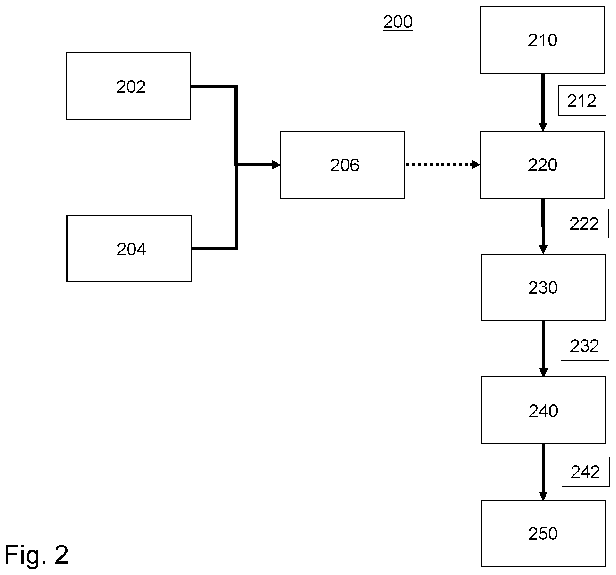

**Fig.** 2 illustrates a flow diagram according to an embodiment of a corresponding method for bone volume assessment.

In a first step, MRI patient scan data 212 of a first patient can be received and/or requested 210, preferably by the processor module 110, from the storage module 120, a MRI scanning device 130 or a remote data storage 150.

Thus, particularly dependent on whether the corresponding system 100 comprises a MRI scanning device 130, the MRI patient scan data 212 can be directly forwarded to the processor module 110 or can be requested/received from the storage module 120 or a (central) remote data storage 150.

In a next step, a first transfer element 220 is applied/used by the processor module 110 to/on the MRI patient scan data 212 such that synthetic CT data 222 are generated and/or determined and/or elaborated.

In particular, a machine learning element like a neural net can be utilized as first transfer element 220 for transforming/converting MRI patient scan data 212 into synthetic CT data 222.

In another step of the method 200, a second transfer element 230 is applied to the MRI patient scan data 212 of the first patient and/or the synthetic CT data 222 in order to generate and/or determine and/or elaborate reduced patient data 232.

For example, the second transfer element 230 can be provided as a Dixon analysis element, or the like for identification of fat volume information, particularly to optimize the subsequent estimation of total bone volume.

Thus, as an alternative, it may also possible to apply machine learning based water-fat decomposition or other types of (analytical) sequences, like e.g IDEAL, MAGO, MAGORINO or acquisition based water-fat decomposition (in -phase and/or out-of-/opposed- phase echo times based).

In a further step, a third transfer element 240 can be applied to the MRI patient scan data 212 of the first patient and/or reduced patient data 232 such that at least one total bone volume information 242 is generated and/or determined and/or elaborated.

The third transfer element 240 can preferably be provided in form of a Nickoloff model such that total bone volume information 242 are identifiable.

On this basis, at least one bone volume parameter can be identified/determined 250.

Thus, in summary the method 200 according to Fig. 2 is capable of analyzing and processing MRI patient scan data 210; 212 in a way such that at least one bone volume parameter 250, e.g. bone mineral density, fat percentage, calcium concentration, total density trabecular space and/or the like, of the first patient can be determined.

Moreover, the method 200 according to Fig. 2 also provides a basis for training, i.e. configuration and adaption, of the first transfer element 220.

In particular, MRI patient scan data 202 and CT patient scan data 204 of a plurality of patients can be provided, e.g. on a remote data storage/server 150 or on the storage module 120 of the system 100.

In a next step, the first transfer element 220 is trained 206, based on the MRI and CT patient scan data 202; 204 of the plurality of patients, to generate improved synthetic CT data 222 from a single set of MRI patient scan data 210.

In particular, the first transfer element 220 can be trained 206 once in order to achieve an at least temporarily fixed setting on basis of the currently available set(s) of MRI and CT patient scan data 202; 204.

Alternatively, the first transfer element 220 can be trained 206 on a temporarily basis, e.g. once a month, on demand, e.g. in case a significant amount of additional, new MRI/CT patient scan data 202; 204 is available, or in a (approximately) continuous manner, e.g. each time a new set of MRI/CT patient scan data is available.

Preferably, the first transfer element 220 can be provided in form of a machine learning element.

For example, the machine learning element can be provided as a deep learning element, a neural net element or the like.

Moreover, in the context of the present invention it is also possible that a machine learning element, like e.g. the first transfer element 220, can be trained by/on basis of output results of a Nickoloff model element being applied on CT patient scan data of a plurality of patients.

The quality of synthetic CT data as generated by application of the first transfer element 220 can be improved in an efficient and beneficial manner on basis of MRI and CT patient scan data 202; 204 of the plurality of patients.

In particular, according to an embodiment of the method of the present invention bone volume assessment can be performed based on one synthetic CT/one set of synthetic CT data 222 of the first patient generated using a method trained

206 with one type CT scans as received from of a plurality of patients 202; 204.

Besides, a fat percentage image has to be present/provided, which can be obtained using a MRI-based water-fat decomposition algorithm element like DIXON, IDEAL, machine learning elements or the like, e.g. in form of applying the second transfer element 230.

Bone mineral density and other associated parameters being associated with bone volume information can then be obtained by using the Nickoloff method, e.g. in form of applying the third transfer element 240.

Finally, only one equation has to be used/solved, as both CT value and the fat volume ($V_F$) are known, such that total bone volume ($V_{TB}$) can be calculated directly 250.

In more detail, such method according to the present invention can make use of the Nickoloff method 240 being based on the following equations, provided with exemplary parameter values according to Koch et al., Accuracy and precision of volumetric bone mineral density assessment using dualsource dual-energy versus quantitative CT: a phantom study, European Radiology Experimental (2021) 5:43 (htts://doi.orq/10.1186/s41747-021-00241-1*):*

$$X^{90}HU = \left(\mu^{90} - \gamma^{90}g\right) \cdot V_{TB} + \left(\beta^{90}t - \gamma^{90}g\right) \cdot V_F + \gamma^{90}g + \delta \quad (1)$$

$$X^{150}HU = \left(\mu^{150} - \gamma^{150}g\right) \cdot V_{TB} + \left(\beta^{150}t - \gamma^{150}g\right) \cdot V_F + \gamma^{150}g + \delta \quad (2)$$

These exemplary equations (1) and (2) link the exemplary intensities $X^{90}$ and $X^{150}$ (given in HU) in the at least one (synthetic) CT series obtained at tube energies of 90 and/or 150 kV to the fraction of the volume occupied by the matrix material (bone mineral + collagen) $V_{TB}$ and the volume of adipose tissue $V_F$. Thereby, the synthetic CT series/set is not obtained with a certain tube energy, but is reconstructed to represent a CT obtained with a certain tube energy.

However, with respect to the present invention parameter $V_F$ is already available from the **MRI** patient scan (data) sequence concerning the first patient. Thus, according to the present invention only one synthetic CT data set is necessary to solve the above equation accordingly.

Moreover, according to the present invention it is particularly possible to use tube energies for the at least one, preferably two, (synthetic) CT series of 20 to 150 kV, preferably of 90 to 150 kV.

The values for t and g may be 0.92 g/cm3 and 1.02 g/cm3, respectively, whereas the other variables ($\mu^{90}$, $\gamma^{90}$, $\beta^{90}$, $\mu^{150}$, $\gamma^{150}$, $\beta^{150}$, $\delta$) are energy related constants with e.g. parameter $\delta$ comprising a constant value of -1000 HU and as can also be gathered for further variable from Table 1 illustrated below, comprising parameter values for different energy level/photon energies:

**Table 1**
**Value of Coefficients Used in CT Number Calculations**

| Photon Energy (keV) | α (calcium hydroxyapatite) | η (collagen) | β (adipose tissue) | θ (red marrow) |
|---|---|---|---|---|
| 40 | 3,628 | 902 | 894 | 938 |
| 50 | 2,543 | 933 | 940 | 955 |
| 60 | 1,951 | 950 | 966 | 971 |
| 80 | 1,396 | 960 | 981 | 979 |
| 100 | 1,176 | 963 | 990 | 983 |
| 150 | 993 | 968 | 999 | 988 |

By calculating the mean intensity for the trabecular bone in both CT data sets, values for $V_{TB}$ and $V_F$ can be attained. Finally, the bone mineral density (BMD) value $\rho$BM (given in g/cm3) can be calculated from $V_{TB}$ by application of the material constants I = 3.06 g/cm3 and $\lambda$ = 2.11 according to equation (3):

$$\rho \mathrm{BM} = \frac{l \cdot V_{TB}}{1 + \lambda} \quad (3)$$

Further parameters can be identified by equations (4) to (6):

$$\mu = \frac{\alpha l + \eta C\lambda.}{1 + \lambda}. \qquad (4)$$

$$\omega\rho_W + \theta\rho_M = \gamma(\rho_W + \rho_M) \equiv \gamma\rho_T. \qquad (5)$$

$$\rho_{TB} = \frac{lV_{BM} + CV_c}{V_{BM} + V_c}, \qquad (6)$$

Hence, bone volume assessment, in particular of bone mineral density and/or other associated bone volume parameters, can be determined and evaluated by the method according to the present invention in an efficient manner with particular respect to costs, time and resources.

In particular, results of such bone mineral density assessment can be considered as absolute values. However, when not calibrated perfectly, these values may be considered as relative values, which may still be very useful within an individual person. Such relative values may preferably correlate with bone mineral density maps but may not be exactly similar to such reference values.

Further, according the another exemplary approach in accordance with the present invention, it is also possible to create/receive (one set/series of) synthetic CT data with a specific tube voltage. Water and/or fat fraction can be derived from (corresponding) MRI data.

Calculation of bone mineral density in the case where Fat fraction and a single CT number are known can be executed as follows.

In detail, CT number ($CT_n$) can generally be determined by the following formula, on basis of a specific voltage, whereby parameter $\delta$ comprises a value of -1000 (i.e. a negative value) and parameter E referring to the water offset number:

$$CT_n = (\mu - \gamma g)V_{TB} + (\beta t - \gamma g)V_F + \gamma g + \delta + \epsilon \qquad (7)$$

Parameters $V_F$ and $V_{TB}$ are generally unknown, whereby $V_F$ can be gathered from results of e.g. Dixon analysis, IDEAL analysis or the like.

Moreover, Ct number parameter $CT_n$ can be gathered from synthetic CT or from a regular CT.

Hence, on basis of formula (7), the total bone volume $V_{TB}$ can be calculated as follows:

$$V_{TB} = \frac{(\beta t - \gamma g)V_F + \gamma g + \delta + \epsilon - CT_n}{-1 * (\mu - \gamma g)} \qquad (8)$$

Subsequently, bone mineral density $\rho_{BM}$ can be calculated, similar to the approach as described by Nickoloff, in respect of formula (9) as follows:

$$\rho_{BM} = \frac{lV_{TB}}{1 + \lambda} \qquad (9)$$

Hence, the present invention also allows for determination and assessment of bone mineral density on basis of created synthetic CT data in an efficient manner.

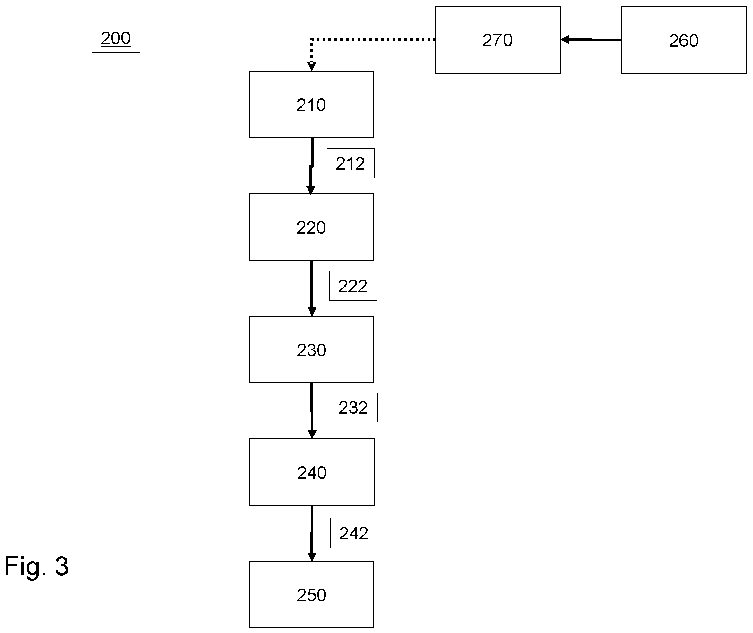

Fig. 3 shows a schematic illustration of the method in accordance with Fig 2, including a step of calibration of the system 100, in particular of the MRI scanning device 130.

In particular, the process a shown in Fig. 3 deviates from the embodiment according to Fig. 2 by the training 206 of

the first transfer element and the calibration 260 of the system 100, preferably of the MRI scanning device 130.

The method according to the present invention can be provided with the step of training 206 of the first transfer element according to Fig. 2, with the calibration step 260 according to Fig. 3 and/or with the training step 206 as well as the calibration step 260.

According to Fig. 3 a calibration phantom element can be provided 260 whereby the calibration phantom element preferably allows for the imaging and post-processing steps to generate images of fat volume to be more precise in order to allow for an improved estimation of fat percentage.

The calibration phantom element can be provided 260 in form of a plurality of tubes and/or balls. The different elements can comprise different water-fat fractions, preferably between/in a range of 0 to 100 percent, in particular in a range of 20 to 80 percent. The calibration phantoms can also comprise a bone mimicking material like hydroxyapatite, calcium, collagen or the like, in concentrations in a range between 0 to 100 percent.

Moreover, resulting T1 and T2 signal weightings can be taken into account for respective optimization of the resulting MRI patient scan data.

On basis of the calibration 270 of the system 100 with the provided calibration phantom element(s) 260, the MRI patient scan data of the first patient can be received/generated 210.

Alternatively, the calibration of the system 100, in particular of the MRI scanning device 130, can also be provided at a later step of the method 200 as shown in Fig. 2 and/or Fig. 3, namely in terms of a calibration of the post-processing of the MRI patient scan data.

In particular, the calibration step 270 can be provided/executed/repeated within (predetermined) time ranges, e.g. once a day, once a week, once a month, once within six months or the like, or can be provided/executed for each patient respectively.

Further, a single or multiple calibration phantoms may also comprise different substances being of interest, e.g. calcium, collagen or the like.

The system 100, in particular the MRI scanning device 130 and/or the image post-processing, can be calibrated in appropriate manner to allow for an optimized image data quality.

In summary the present invention particularly discloses a system as well as a method in order to allow for bone volume assessment/evaluation on basis of a single medical imaging technique, namely MRI patient scan data of a first patient.

Moreover, by application of different transfer elements, a.o. a machine learning element as a first transfer element, the MRI patient scan data can be processed for identification of specific information, like fat volume and total bone volume information in order to identify at least one bone volume parameter of the first patient finally, in particular by combination of the processed data.

Reference numerals

100 System
110 Processor module
120 Storage module
130 **MRI** scanning device
140 Data connection
150 Remote data storage/Server
200 Method
202 Receiving **MRI** patient scan data of plurality of patients
204 Receiving CT patient scan data of plurality of patients
206 Training of first transfer element
210 Receiving **MRI** patient scan data of first patient
212 **MRI** patient scan data of first patient
220 Applying first transfer element
222 Synthetic CT data
230 Applying second transfer element
232 Reduced patient data
240 Applying third transfer element
242 Total bone volume information
250 Determine bone volume parameter
260 Providing a phantom element
270 Executing a calibration for the system

## Claims

1. System (100) for bone volume assessment based on MRI patient scan data , comprising

   - at least one processor module (110) for handling and processing of MRI patient scan data,
   - at least one storage module (120) for storing patient data,

   wherein at least one data connection (140) is provided between the processor module (110) and the at least one storage module (120) such that data are transferrable for processing and/or for storing,
   wherein the processor module (110) is further configured:

     - to receive and/or request at least one set of MRI patient scan data of a first patient from the storage module (120) or from a MRI scanning device (130) and to apply a first transfer element on the at least one set of MRI patient scan data of the first patient such that at least one set of synthetic CT data of the first patient is provided,
     - to apply a second transfer element on the at least one set of MRI patient scan data of the first patient such that reduced patient data of the first patient are generated which provide tissue volume information comprising fat volume related information of the first patient,
     - to apply a third transfer element on the reduced patient data and the at least one set of synthetic CT data of the first patient such that total bone volume information are achieved,

   wherein the processor module (110) is configured to process and/or analyse the MRI patient scan data, the at least one set of synthetic CT data and the reduced patient data such that at least one bone volume parameter in form of bone mineral density of the first patient is determined.

2. System (100) according to claim 1,
**characterized in that**
the first transfer element is trained on basis of CT patient scan data and MRI patient scan data of a plurality of patients to generate synthetic CT data.

3. System (100) according to claim 2,
**characterized in that**
training data, in particular the CT patient scan data and/or MRI patient scan data of the plurality of patients, for training and/or adaption of the first transfer element are stored in the storage module (120) of the system (100) and/or received by the system (100) from a remote data storage (150).

4. System (100) according to one of the preceding claims,
**characterized in that**
the first transfer element is provided in form of a machine learning element, in particular in form of a deep learning element, a neural net element, preferably a neural net of the type of Transformer, Encoder-decoder, diffusion, U-net, V-net, recurrent neural net, recurrent interface network (RIN) or Perceiver IO, or any other kind of a machine learning element.

5. System (100) according to one of claims 2 to 4,
**characterized in that**
the CT patient scan data of the plurality of patients is provided in form of respectively two sets of CT patient scan data referring to different energy levels, in particular dual energy CT patient scan data, or to unenhanced multi-energy scan data.

6. System (100) according to one of the preceding claims,
**characterized in that**
the second transfer element is provided in form of an analysis element of the type Dixon, IDEAL, MAGO, MAGORINO, as a machine learning based water-fat decomposition or an in-phase and/or out-of-phase acquisition based water-fat decomposition in order to determine fat and/or water volume related information from the MRI patient scan data.

7. System (100) according to one of the preceding claims,
**characterized in that**
the third transfer element is provided in form of a Nickoloff model element for determination of total bone volume information, in particular on basis of the MRI patient scan data and/or the reduced patient data of the first patient.

8. System (100) according to one of the preceding claims,
**characterized in that**
the MRI patient scan data are provided by application of (multi-echo) gradient-echo sequences, (turbo-)spin-echo sequences, dual-echo steady state (DESS) multi-echo steady state (MESS) sequences, balanced sequences (e.g. bSSFP), (Multi-echo) Ultrashort echo time (UTE) sequences, zero TE (ZTE) sequences or synthetic MRI (MR-fingerprinting-based, MR-STAT-based), in particular such that enhanced determination of fat volume information of the first patient by the transfer elements is provided.

9. System (100) according to one of the preceding claims,
**characterized in that**
the MRI patient scan data and/or CT patient scan data are provided and/or stored in DICOM format, HDF5 format or NIfTI format.

10. System (100) according to one of the preceding claims,
**characterized in that**

the system (100) comprises at least one MRI scanning device (130),
wherein the data connection (140) is provided between the at least one MRI scanning device and the at least one processor module and/or the at least one storage module, in particular a unidirectional data connection (140).

11. System (100) according to one of the preceding claims,
**characterized in that**

the system (100) further comprises a calibration phantom element,
wherein the calibration phantom element is applied once for determination of a general calibration factor for the MRI patient scan data of a plurality of patients or for each MRI patient scan data of a plurality of patients respectively in order to determine individual calibration factors for the plurality of patients.

12. System (100) according to claim 10,
**characterized in that**
the calibration phantom element is provided in form of a plurality of tubes and/or balls being filled with a homogenous or varying water-fat-fractions, preferably within water-fat-fractions in a range of 20 to 80 percent.

13. Method (200) for bone volume assessment based on MRI patient scan data by application of the system (100) according to one of the preceding claims, the method (200) comprising the following steps:

- receiving and/or requesting (210) at least one set of MRI patient scan data (212) of a first patient from the storage module or from a MRI scanning device, and applying a first transfer element (220) on the at least one set of MRI patient scan data of the first patient such that at least one set of synthetic CT data (222) of the first patient is generated,
- applying a second transfer element (230) on the at least one set of MRI patient scan data (212) of the first patient such that reduced patient data (232) of the first patient are generated which provide tissue volume information comprising fat volume information of the first patient,
- applying a third transfer element (240) on the reduced patient data (232) and the at least one set of synthetic CT data (222) of the first patient such that total bone volume information (242) are generated,

wherein the MRI patient scan data (212), the at least one set of synthetic CT data (222) and the reduced patient data (232) are processed and/or analysed and/or evaluated by the processor module in order to determine at least one bone volume parameter (250) in form of bone mineral density of the first patient on basis of the MRI patient scan data (212) of the first patient.

14. Method (200) according to claim 13,
**characterized in that**
the method (200) further comprises the following steps:

- receiving MRI patient scan data (202) of a plurality of patients,
- receiving CT patient scan data (204) of the plurality of patients,
- applying the MRI patient scan data (202) and the CT patient scan data (204) of the plurality of patients for training

of the first transfer element (206), preferably in form of a deep learning element or a neural net element, to generate at least one set of synthetic CT data (222) on basis of the MRI patient scan data (212) of the first patient.

**15.** Computer-readable medium comprising instructions which cause at least one computer to execute the method (200) according to claim 13 or 14.

## Patentansprüche

**1.** System (100) zur Knochenvolumenbeurteilung auf der Grundlage von **MRT-**Patientenscandaten, umfassend

- mindestens ein Prozessormodul (110) zur Handhabung und Verarbeitung von MRT-Patientenscandaten,
- mindestens ein Speichermodul (120) zum Speichern von Patientendaten,

wobei mindestens eine Datenverbindung (140) zwischen dem Prozessormodul (110) und dem mindestens einen Speichermodul (120) bereitgestellt ist, sodass Daten zum Verarbeiten und/oder zum Speichern übertragbar sind, wobei das Prozessormodul (110) ferner ausgelegt ist zum:

- Empfangen und/oder Anfordern mindestens eines Satzes von **MRT-**Patientenscandaten eines ersten Patienten von dem Speichermodul (120) oder von einer MRT-Scanvorrichtung (130), und Anwenden eines ersten Transferelements auf den mindestens einen Satz von **MRT-**Patientenscandaten des ersten Patienten, sodass mindestens ein Satz von synthetischen CT-Daten des ersten Patienten bereitgestellt wird,
- Anwenden eines zweiten Transferelements auf den mindestens einen Satz von MRT-Patientenscandaten des ersten Patienten, sodass reduzierte Patientendaten des ersten Patienten generiert werden, die Gewebevolumeninformationen bereitstellen, die fettvolumenbezogene Informationen des ersten Patienten umfassen,
- Anwenden eines dritten Transferelements auf die reduzierten Patientendaten und den mindestens einen Satz synthetischer CT-Daten des ersten Patienten, sodass Gesamtknochenvolumeninformationen erreicht werden,

wobei das Prozessormodul (110) ausgelegt ist zum Verarbeiten und/oder Analysieren der MRT-Patientenscandaten, des mindestens einen Satzes synthetischer CT-Daten und der reduzierten Patientendaten, sodass mindestens ein Knochenvolumenparameter in Form einer Knochenmineraldichte des ersten Patienten bestimmt wird.

**2.** System (100) nach Anspruch 1,
**dadurch gekennzeichnet, dass**
das erste Transferelement basierend auf CT-Patientenscandaten und MRT-Patientenscandaten einer Vielzahl von Patienten trainiert wird, um synthetische CT-Daten zu generieren.

**3.** System (100) nach Anspruch 2,
**dadurch gekennzeichnet, dass**
Trainingsdaten, insbesondere die CT-Patientenscandaten und/oder MRT-Patientenscandaten der Vielzahl von Patienten, zum Training und/oder zur Adaption des ersten Transferelements in dem Speichermodul (120) des Systems (100) gespeichert und/oder von dem System (100) aus einem entfernten Datenspeicher (150) empfangen werden.

**4.** System (100) nach einem der vorhergehenden Ansprüche,
**dadurch gekennzeichnet, dass**
das erste Transferelement in Form eines maschinellen Lernelements, insbesondere in Form eines Deep-Learning-Elements, eines neuronalen Netzelements, vorzugsweise eines neuronalen Netzes vom Typ Transformer, Encoder-Decoder, Diffusion, U-Netz, V-Netz, rekurrentes neuronales Netz, rekurrentes Schnittstellennetzwerk (RIN) oder Perceiver-IO oder eine beliebige andere Art eines maschinellen Lernelements bereitgestellt wird.

**5.** System (100) nach einem der Ansprüche 2 bis 4,
**dadurch gekennzeichnet, dass**
die CT-Patientenscandaten der Vielzahl von Patienten in Form von jeweils zwei Sätzen von CT-Patientenscandaten bereitgestellt werden, die sich auf unterschiedliche Energieniveaus beziehen, insbesondere Dual-Energy-CT-Patientenscandaten oder auf nicht enhanced Multi-Energy-Scandaten.

6. System (100) nach einem der vorhergehenden Ansprüche,
**dadurch gekennzeichnet, dass**
das zweite Transferelement in Form eines Analyseelements des Typs Dixon, IDEAL, MAGO, MAGORINO, als eine auf maschinellem Lernen basierende Wasser-Fett-Zerlegung oder eine auf in-Phase- und/oder außerphasiger Erfassung basierende Wasser-Fett-Zerlegung zur Bestimmung von fett- und/oder wasservolumenbezogenen Informationen aus den MRT-Patientenscandaten bereitgestellt wird.

7. System (100) nach einem der vorhergehenden Ansprüche,
**dadurch gekennzeichnet, dass**
das dritte Transferelement in Form eines Nickoloff-Modellelements zur Bestimmung von Gesamtknochenvolumeninformationen bereitgestellt wird, insbesondere basierend auf den MRT-Patientenscandaten und/oder den reduzierten Patientendaten des ersten Patienten.

8. System (100) nach einem der vorhergehenden Ansprüche,
**dadurch gekennzeichnet, dass**
die MRT-Patientenscandaten durch Anwendung von (Multi-Echo) Gradienten-Echo-Sequenzen, (Turbo-)Spin-Echo-Sequenzen, Dual-Echo Steady State (DESS) Multi-Echo Steady State (MESS)-Sequenzen, symmetrischen Sequenzen (z. B. bSSFP), (Multi-Echo) Ultrashort-Echo Time (UTE)-Sequenzen, Zero TE (ZTE)-Sequenzen oder synthetischer MRT (MR-Fingerprint-basiert, MR-STAT-basiert) bereitgestellt werden, insbesondere so, dass erweiterte (enhanced) Bestimmung der Fett-Volumen-Informationen des ersten Patienten durch die Transferelemente bereitgestellt wird.

9. System (100) nach einem der vorhergehenden Ansprüche,
**dadurch gekennzeichnet, dass**
die MRT-Patientenscandaten und/oder CT-Patientenscandaten im DICOM-Format, HDF5-Format oder NIfTI-Format bereitgestellt und/oder gespeichert werden.

10. System (100) nach einem der vorhergehenden Ansprüche,
**dadurch gekennzeichnet, dass**

das System (100) mindestens eine MRT-Scanvorrichtung (130) umfasst,
wobei die Datenverbindung (140) zwischen der mindestens einen MRT-Scanvorrichtung und dem mindestens einen Prozessormodul und/oder dem mindestens einen Speichermodul, insbesondere einer unidirektionalen Datenverbindung (140), bereitgestellt wird.

11. System (100) nach einem der vorhergehenden Ansprüche,
**dadurch gekennzeichnet, dass**

das System (100) ferner ein Kalibrierphantomelement umfasst,
wobei das Kalibrierphantomelement einmal zur Bestimmung eines allgemeinen Kalibrierfaktors für die MRT-Patientenscandaten einer Vielzahl von Patienten beziehungsweise für jede MRT-Patientenscandaten einer Vielzahl von Patienten angewendet wird, um individuelle Kalibrierfaktoren für die Vielzahl von Patienten zu bestimmen.

12. System (100) nach Anspruch 10,
**dadurch gekennzeichnet, dass**
das Kalibrierphantomelement in Form einer Vielzahl von Rohren und/oder Kugeln bereitgestellt wird, die mit einer homogenen Wasser-Fett-Fraktion oder variierenden Wasser-Fett-Fraktionen gefüllt sind, vorzugsweise innerhalb von Wasser-Fett-Fraktionen im Bereich von 20 bis 80 Prozent.

13. Verfahren (200) zur Knochenvolumenbeurteilung basierend auf **MRT-**Patientenscandaten durch Anwendung des Systems (100) nach einem der vorhergehenden Ansprüche, wobei das Verfahren (200) die folgenden Schritte umfasst:

- Empfangen und/oder Anfordern (210) mindestens eines Satzes von **MRT-**Patientenscandaten (212) eines ersten Patienten von dem Speichermodul oder von einer MRT-Scanvorrichtung, und Anwenden eines ersten Transferelements (220) auf den mindestens einen Satz von MRT-Patientenscandaten des ersten Patienten, sodass mindestens ein Satz von synthetischen CT-Daten (222) des ersten Patienten generiert wird,

- Anwenden eines zweiten Transferelements (230) auf den mindestens einen Satz von MRT-Patientenscandaten (212) des ersten Patienten, sodass reduzierte Patientendaten (232) des ersten Patienten generiert werden, die Gewebevolumeninformationen bereitstellen, die Fettvolumeninformationen des ersten Patienten umfassen,
- Anwenden eines dritten Transferelements (240) auf die reduzierten Patientendaten (232) und den mindestens einen Satz synthetischer CT-Daten (222) des ersten Patienten, sodass Gesamtknochenvolumeninformationen (242) generiert werden,

wobei die MRT-Patientenscandaten (212), der mindestens eine Satz synthetischer CT-Daten (222) und die reduzierten Patientendaten (232) durch das Prozessormodul verarbeitet und/oder analysiert und/oder ausgewertet werden, um mindestens einen Knochenvolumenparameter (250) in Form einer Knochenmineraldichte des ersten Patienten auf Basis der MRT-Patientenscandaten (212) des ersten Patienten zu bestimmen.

**14.** Verfahren (200) nach Anspruch 13,

**dadurch gekennzeichnet, dass**
das Verfahren (200) ferner die folgenden Schritte umfasst:

- Empfangen von MRT-Patientenscandaten (202) einer Vielzahl von Patienten,
- Empfangen von CT-Patientenscandaten (204) der Vielzahl von Patienten,
- Anwenden der MRT-Patientenscandaten (202) und der CT-Patientenscandaten (204) der Vielzahl von Patienten zum Training des ersten Transferelements (206), vorzugsweise in Form eines Deep-Learning-Elements oder eines neuronalen Netzelements, um mindestens einen Satz synthetischer CT-Daten (222) basierend auf den MRT-Patientenscandaten (212) des ersten Patienten zu generieren.

**15.** Computerlesbares Medium, das Anweisungen umfasst, die bewirken, dass mindestens ein Computer das Verfahren (200) nach Anspruch 13 oder 14 ausführt.

**Revendications**

**1.** Système (100) d'évaluation de volume osseux sur la base de données de balayage de patient IRM, comprenant

- au moins un module processeur (110) pour la manipulation et le traitement de données de balayage de patient IRM,
- au moins un module de stockage (120) pour le stockage de données patient,
au moins une liaison de données (140) étant prévue entre le module processeur (110) et l'au moins un module de stockage (120) de sorte que des données soient transférables pour le traitement et/ou le stockage,
le module processeur (110) étant en outre configuré :

- pour recevoir et/ou demander au moins un ensemble de données de balayage de patient IRM d'un premier patient depuis le module de stockage (120) ou d'un dispositif de balayage IRM (130) et pour appliquer un premier élément de transfert sur l'au moins un ensemble de données de balayage de patient IRM du premier patient de telle sorte qu'au moins un ensemble de données CT synthétiques du premier patient soit fourni,
- pour appliquer un deuxième élément de transfert sur l'au moins un ensemble de données de balayage de patient IRM du premier patient de telle sorte que des données patient réduites du premier patient soient générées qui fournissent des informations de volume tissulaire comprenant des informations liées au volume de graisse du premier patient,
- pour appliquer un troisième élément de transfert sur les données patient réduites et l'au moins un ensemble de données CT synthétiques du premier patient de sorte que des informations de volume osseux total soient atteintes,

le module processeur (110) étant configuré pour traiter et/ou analyser les données de balayage de patient IRM, l'au moins un ensemble de données CT synthétiques et les données patient réduites de telle sorte qu'au moins un paramètre de volume osseux sous la forme d'une densité minérale osseuse du premier patient soit déterminé.

**2.** Système (100) selon la revendication 1,
**caractérisé en ce que**
le premier élément de transfert est entraîné sur la base de données de balayage de patient CT et de données de

balayage de patient IRM d'une pluralité de patients afin de générer des données CT synthétiques.

**3.** Système (100) selon la revendication 2,
**caractérisé en ce que**
des données d'apprentissage, en particulier les données de balayage de patient CT et/ou les données de balayage de patient IRM de la pluralité de patients, pour l'apprentissage et/ou l'adaptation du premier élément de transfert sont stockées dans le module de stockage (120) du système (100) et/ou reçues par le système (100) à partir d'une mémoire de données distante (150).

**4.** Système (100) selon l'une des revendications précédentes,
**caractérisé en ce que**
le premier élément de transfert est fourni sous la forme d'un élément d'apprentissage automatique, en particulier sous la forme d'un élément d'apprentissage profond, d'un élément de réseau neuronal, de préférence un réseau neuronal du type Transformateur, Encodeur-décodeur, diffusion, U-net, V-net, réseau neuronal récurrent, réseau d'interface récurrent (RIN) ou Perceiver IO, ou de tout autre type d'élément d'apprentissage automatique.

**5.** Système (100) selon l'une quelconque des revendications 2 à 4,
**caractérisé en ce que**
les données de balayage de patient CT de la pluralité de patients sont fournies sous la forme de respectivement deux ensembles de données de balayage de patient CT se référant à différents niveaux d'énergie, en particulier des données de balayage de patient CT à double énergie, ou à des données de balayage multi-énergie non améliorées.

**6.** Système (100) selon l'une des revendications précédentes,
**caractérisé en ce que**
le deuxième élément de transfert est fourni sous la forme d'un élément d'analyse du type Dixon, IDEAL, MAGO, MAGORINO, comme une décomposition eau-graisse basée sur l'apprentissage automatique ou une décomposition eau-graisse basée sur une acquisition en phase et/ou hors phase afin de déterminer des informations relatives au volume de graisse et/ou d'eau à partir des données de balayage de patient IRM.

**7.** Système (100) selon l'une des revendications précédentes,
**caractérisé en ce que**
le troisième élément de transfert est fourni sous la forme d'un élément de modèle de Nickoloff pour la détermination d'informations de volume osseux total, en particulier sur la base des données de balayage de patient IRM et/ou des données patient réduites du premier patient.

**8.** Système (100) selon l'une des revendications précédentes,
**caractérisé en ce que**
les données de balayage de patient IRM sont fournies par l'application de séquences d'écho de gradient (multi-écho), de séquences d'écho de spin (turbo-), de séquences d'état d'équilibre à double écho (DESS), de séquences d'état d'équilibre multi-écho (MESS), de séquences équilibrées (par exemple bSSFP), de séquences à temps d'écho ultracourt (UTE) (multi-écho), de séquences à TE nul (ZTE) ou d'IRM synthétique (basée sur l'empreinte MR, basée sur MR-STAT), en particulier de telle sorte qu'une détermination améliorée d'informations de volume de graisse du premier patient par les éléments de transfert soit fournie.

**9.** Système (100) selon l'une des revendications précédentes,
**caractérisé en ce que**
les données de balayage de patient IRM et/ou les données de balayage de patient CT sont fournies et/ou stockées au format DICOM, au format HDF5 ou au format NIfTI.

**10.** Système (100) selon l'une des revendications précédentes,
**caractérisé en ce que**

le système (100) comprend au moins un dispositif de balayage IRM (130),
la liaison de données (140) étant prévue entre l'au moins un dispositif de balayage IRM et l'au moins un module processeur et/ou l'au moins un module de stockage, en particulier une liaison de données unidirectionnelle (140).

**11.** Système (100) selon l'une des revendications précédentes,
**caractérisé en ce que**

le système (100) comprend en outre un élément fantôme d'étalonnage, l'élément fantôme d'étalonnage étant appliqué une fois pour la détermination d'un facteur d'étalonnage général pour les données de balayage de patient IRM d'une pluralité de patients ou pour chacune des données de balayage de patient IRM d'une pluralité de patients respectivement afin de déterminer des facteurs d'étalonnage individuels pour la pluralité de patients.

**12.** Système (100) selon la revendication 10,
**caractérisé en ce que**
l'élément fantôme d'étalonnage est fourni sous la forme d'une pluralité de tubes et/ou de billes qui sont remplis d'une fraction eau-graisse homogène ou variable, de préférence dans des fractions eau-graisse dans une plage de 20 à 80 %.

**13.** Procédé (200) d'évaluation de volume osseux sur la base de données de balayage de patient IRM par l'application du système (100) selon l'une des revendications précédentes, le procédé (200) comprenant les étapes suivantes :

- la réception et/ou la demande (210) d'au moins un ensemble de données de balayage de patient IRM (212) d'un premier patient depuis le module de stockage ou depuis un dispositif de balayage IRM, et l'application d'un premier élément de transfert (220) sur l'au moins un ensemble de données de balayage de patient IRM du premier patient de telle sorte qu'au moins un ensemble de données CT synthétiques (222) du premier patient soit généré,
- l'application d'un deuxième élément de transfert (230) sur l'au moins un ensemble de données de balayage de patient IRM (212) du premier patient de telle sorte que des données patient réduites (232) du premier patient soient générées qui fournissent des informations de volume tissulaire comprenant des informations de volume de graisse du premier patient,
- l'application d'un troisième élément de transfert (240) sur les données patient réduites (232) et l'au moins un ensemble de données CT synthétiques (222) du premier patient de telle sorte que des informations de volume osseux total (242) soient générées,

les données de balayage de patient IRM (212), l'au moins un ensemble de données CT synthétiques (222) et les données patient réduites (232) étant traitées et/ou analysées et/ou évaluées par le module processeur afin de déterminer au moins un paramètre de volume osseux (250) sous la forme d'une densité minérale osseuse du premier patient sur la base des données de balayage de patient IRM (212) du premier patient.

**14.** Procédé (200) selon la revendication 13,
**caractérisé en ce que**
le procédé (200) comprend en outre les étapes suivantes :

- la réception de données de balayage de patient IRM (202) d'une pluralité de patients,
- la réception de données de balayage de patient CT (204) de la pluralité de patients,
- l'application des données de balayage de patient IRM (202) et des données de balayage de patient CT (204) de la pluralité de patients pour l'apprentissage du premier élément de transfert (206), de préférence sous la forme d'un élément d'apprentissage profond ou d'un élément de réseau neuronal, pour générer au moins un ensemble de données CT synthétiques (222) sur la base des données de balayage de patient IRM (212) du premier patient.

**15.** Support lisible par ordinateur comprenant des instructions qui amènent au moins un ordinateur à exécuter le procédé (200) selon la revendication 13 ou 14.

150
140
120
140
140
110
140
130
100

Fig. 1

200
210
212
220
222
230
232
240
242
250
206
202
204

Fig. 2

260
270
210
212
220
222
230
232
240
242
250

200

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20210270919 A1


### Non-patent literature cited in the description


- **GENANT HK** ; **BOYD D**. Quantitative bone mineral analysis using dual energy computed tomography. *Invest Radiol.*, November 1977, vol. 12 (6), 545-51
- **CANN CE** ; **GENANT HK**. Precise measurement of vertebral mineral content using computed tomography. *J Comput Assist Tomogr.*, August 1980, vol. 4 (4), 493-500
- **GENANT HK** ; **CANN CE** ; **ETTINGER B** ; **GORDAN GS** ; **KOLB FO** ; **REISER U** ; **ARNAUD CD**. Quantitative computed tomography for spinal mineral assessment: current status. *J Comput Assist Tomogr.*, May 1985, vol. 9 (3), 602-4
- **NICKOLOFF EL** ; **FELDMAN F** ; **ATHERTON JV**. Bone mineral assessment: new dual-energy CT approach. *Radiology*, July 1988, vol. 168 (1), 223-8
- **WESARG S** ; **KIRSCHNER M** ; **BECKER M** ; **ERDT M** ; **KAFCHITSAS K** ; **KHAN MF**. Dual-energy CT-based assessment of the trabecular bone in vertebrae. *Methods Inf Med.*, 28 September 2012, vol. 51 (5), 398-405
- **WICHMANN JL** ; **BOOZ C** ; **WESARG S** ; **KAFCHITSAS K** ; **BAUER RW** ; **KERL JM** ; **LEHNERT T** ; **VOGL TJ** ; **KHAN MF**. Dual-energy CT-based phantomless in vivo three-dimensional bone mineral density assessment of the lumbar spine. *Radiology*, 16 January 2014, vol. 271 (3), 778-84
- **BOOZ C** ; **HOFMANN PC** ; **SEDLMAIR M** ; **FLOHR TG** ; **SCHMIDT B** ; **D'ANGELO T** ; **MARTIN SS** ; **LENGA L** ; **LEITHNER D** ; **VOGL TJ**. Evaluation of bone mineral density of the lumbar spine using a novel phantomless dual-energy CT post-processing algorithm in comparison with dual-energy X-ray absorptiometry. *Eur Radiol Exp.*, 20 September 2017, vol. 1 (1), 11
- **WICHMANN JL1** ; **BOOZ C** ; **WESARG S** ; **BAUER RW** ; **KERL JM** ; **FISCHER S** ; **LEHNERT T** ; **VOGL TJ** ; **KHAN MF** ; **KAFCHITSAS K**. Quantitative dual-energy CT for phantomless evaluation of cancellous bone mineral density of the vertebral pedicle: correlation with pedicle screw pull-out strength. *Eur Radiol.*, 07 December 2014, vol. 25 (6), 1714-20
- *ACR -SPR -SSR Practice Guideline for the Performance of Quantitative Computed Tomography (QCT) Bone Densitometry (Resolution 32)*, 2013, http://www.acr.org/~/media/ACR/ Documents/PGTS/guidelines/QCT.pdf
- **HO KAI-YU et al.** Measuring Bone Mineral Density with Fat-Water MRI: Comparison with Computed Tomography. *Journal of Magnetic Resonance Imaging*, 10 July 2012
- **WICHMANN JL1** ; **BOOZ C** ; **WESARG S** ; **BAUER RW** ; **KERL JM** ; **FISCHER S** ; **LEHNERT T** ; **VOGL TJ** ; **KHAN MF** ; **AFCHITSAS K**. Quantitative dual-energy CT for phantomless evaluation of cancellous bone mineral density of the vertebral pedicle: correlation with pedicle screw pull-out strength. *Eur Radiol.*, 07 December 2014, vol. 25 (6), 1714-20
- **TRIAY BAGUR et al.** Magnitude-intrinsic water-fat ambiguity can be resolved with multipeak fat modeling and a multipoint search method. *Magnetic Resonance in Medicine*, vol. 82 (1), 460-475
- **BRAY et al.** MAGORINO: Magnitude-only fat fraction and R*2 estimation with Rician noise modelling. *Magnetic Resonance in Medicine*, vol. 89 (3), 1173-1192
- **LIU et al.** Robust water-fat separation based on deep learning model exploring multi-echo nature of mGRE. *Magnetic Resonance in Medicine*, vol. 85 (5), 2828-2841
- **KOCH et al.** Accuracy and precision of volumetric bone mineral density assessment using dualsource dual-energy versus quantitative CT: a phantom study. *European Radiology Experimental*, 2021, vol. 5, 43, https://doi.orq/10.1186/s41747-021-00241-1